# FASCICULE DE BREVET EUROPEEN

(11) **EP 2 052 994 B1**
(45) Date de publication et mention de la délivrance du brevet: **13.04.2011**
(21) Numéro de dépôt: 08356136.5
(22) Date de dépôt: 17.10.2008
(51) Int. Cl.: B65G 1/04

(54) **Transstockeur avec nacelle à convoyeur embarqué pour magasin de stockage automatisé**
Regalförderzeug mit Gondel und fahrzeugseitigem Förderband für Lager mit automatisierter Lagerhaltung
Storage and retrieval machine with on-board boom lift with conveyor for an automated storage warehouse

(30) Priorité: 24.10.2007 FR 0707463
(43) Date de publication de la demande: 29.04.2009
(73) Titulaire: SAVOYE, 21000 Dijon (FR)
(72) Inventeur: Dury, Pascal, 21000 Dijon (FR); Kress, Pierre, 21110 Tart L'Abbaye (FR); Valentin, Fabrice, 51470 Saint Memmie (FR)
(74) Mandataire: Bratel, Gérard

(56) Documents cités:
- FR-A- 2 192 957

## Description

La présente invention se rapporte, de manière générale, au domaine technique des magasins de stockage automatisés de palettes, du genre de ceux comportant plusieurs niveaux desservis par au moins un mobile désigné comme transstockeur, et comportant à chaque niveau des rayonnages équipés de rails horizontaux sur lesquels se déplacent des véhicules autonomes de transfert. Dans ce contexte, l'invention s'intéresse plus particulièrement à un transstockeur et, encore plus précisément, à un transstockeur dont la nacelle est équipée d'un convoyeur embarqué, utilisable dans des opérations de transfert de palettes notamment à l'entrée du magasin de stockage concerné, lors de l'exploitation de ce magasin de stockage.

Un tel magasin de stockage automatisé comporte au moins une allée, dans laquelle se déplace horizontalement un transstockeur. Ce dernier comporte lui-même une nacelle mobile verticalement, apte à prendre en charge ou à délivrer les palettes. Ainsi, le transstockeur peut desservir les différents niveaux et rayonnages du magasin de stockage, situés de part d'autre de l'allée dans laquelle se déplace ce transstockeur, en plaçant un véhicule embarqué sur sa nacelle en face de chaque entrée d'allée.

Il existe déjà des transstockeurs dont la nacelle possède un convoyeur embarqué, utilisé pour le transfert des palettes par exemple sur un convoyeur de sortie. Il s'agit généralement d'un convoyeur à chaînes, placé en position centrale sur la nacelle de transstockeur. Le convoyeur est alimenté par un véhicule étroit qui vient se placer entre les chaînes de ce convoyeur. En variante, le convoyeur peut faire partie du véhicule lui-même.

De tels convoyeurs embarqués sont actuellement destinés aux magasins de stockage automatisés dits "multi-profondeur", dans lesquels les allées de transstockeur desservent des emplacements de palettes qui reçoivent chacun successivement plusieurs palettes. A titre d'exemples, il est ici fait référence aux documents de brevets WO 95/23730 (ou EP 0696980), US 4286911, US 5540532(ou GB 2283969) et US 7128521, au moins en ce qui concerne la conception générale du magasin de stockage avec transstockeur.

Toutefois, on connaît aussi des magasins de stockage automatisés dans lesquels, selon une conception différente de la précédente, les allées de transstockeur desservent à chaque niveau des voies de roulement perpendiculaires à ces allées, constituées par des rails horizontaux sur lesquels se déplacent des véhicules autonomes de transfert. Ces véhicules accèdent ainsi à des emplacements de palettes situés de part et d'autre de chaque voie de roulement. Contrairement à la précédente, cette solution offre un accès direct à chaque emplacement de palette. Toutefois, dans les réalisations connues de cette solution, il n'est prévu aucun convoyeur embarqué sur la nacelle du transstockeur. Ainsi, la nacelle ne comporte qu'un seul emplacement, lequel est prévu pour être provisoirement occupé par l'un des véhicules autonomes appelés à se déplacer sur les voies de roulement perpendiculaires à l'allée de transstockeur. A titre d'exemple, il est ici fait référence au document de brevet FR 2 192 957, qui divulgue un transstockeur conforme au préambule de la revendication 1.

En conséquence d'une telle conception, tout véhicule autonome de transfert doit quitter la nacelle du transstockeur, pendant les échanges de palettes entre le transstockeur d'une part, et les convoyeurs d'entrée et de sortie d'autre part, lesquels sont habituellement situés au niveau du sol et utilisés pour alimenter en palettes le magasin de stockage ou pour en évacuer les palettes. Il en résulte que les échanges de palettes avec l'entrée et la sortie du magasin demandent un certain temps, ce qui augmente les temps de cycle totaux dans l'exploitation du magasin. En quelque sorte, les avantages de la solution avec véhicules autonomes de transfert restent, actuellement, compensés par la lenteur des opérations d'entrée et de sortie des palettes.

La présente invention vise à remédier à ces inconvénients, et elle a donc pour but de fournir un transstockeur perfectionné pour magasins de stockage automatisés, du genre ici considéré, transstockeur dont la conception évite au véhicule autonome de transfert de quitter ce transstockeur pendant les échanges de palettes avec les convoyeurs d'entrée et de sortie du magasin, afin de rendre ces échanges de palettes plus rapides et ainsi réduire les temps de cycles totaux de l'installation.

A cet effet, l'invention a pour objet un transstockeur avec nacelle à convoyeur embarqué pour magasin de stockage automatisé de palettes, le transstockeur étant déplaçable dans une allée de transstockeur du magasin, et étant adapté pour un magasin de stockage utilisant des véhicules autonomes de transfert se déplaçant horizontalement dans une direction perpendiculaire à l'allée de transstockeur, ce transstockeur possédant une nacelle mobile verticalement qui comporte, sensiblement sur un même niveau, d'une part un emplacement de réception pour un véhicule autonome de transfert, et d'autre part un convoyeur embarqué situé sur un côté de l'emplacement de réception pour le véhicule autonome de transfert, la direction horizontale de déplacement du convoyeur embarqué étant parallèle à la direction de déplacement du véhicule autonome de transfert.

Ainsi, le transstockeur de la présente invention se caractérise essentiellement par la combinaison, sur sa nacelle, d'un emplacement apte à recevoir un véhicule autonome de transfert, et d'un convoyeur disposé latéralement par rapport audit emplacement pour le véhicule autonome. Un tel véhicule peut donc rester en stationnement sur cet emplacement, pendant que s'effectuent, par mise en action du convoyeur embarqué, des opérations d'entrée et de sortie des palettes, par échange avec les convoyeurs d'entrée et/ou de sortie. Le convoyeur embarqué reste ainsi l'élément principal du dispositif de chargement des palettes sur la nacelle du transstockeur et aussi d'évacuation des palettes hors de la nacelle du transstockeur. De plus, la présence du véhicule autonome sur le côté du convoyeur embarqué permet de réaliser, sur la nacelle du transstockeur, la prise en charge d'une palette par le véhicule reçu à l'emplacement précité depuis le convoyeur embarqué, ou inversement le déchargement d'une palette depuis le véhicule vers le convoyeur embarqué, ceci au cours du mouvement du transstockeur. Ainsi les opérations de chargement ou de déchargement du véhicule autonome de transfert s'effectuent en "temps masqué". De plus, ces opérations sont aisément réalisables au moyen de fourches latérales de manutention de palettes qui équipent le véhicule autonome de transfert, sans recourir à des dispositifs additionnels qui seraient à prévoir sur la nacelle du transstockeur.

L'emplacement de la nacelle du transstockeur recevant le véhicule autonome de transfert peut comporter simplement, sur sa longueur, des guides horizontaux parallèles à la direction de déplacement du véhicule autonome de transfert, guides sur lesquels est reçu ledit véhicule.

Le convoyeur embarqué consiste avantageusement en un convoyeur mototisé à chaînes sans fin, la direction de défilement des chaînes étant parallèle à la direction de déplacement du véhicule autonome de transfert, donc en particulier à la direction des guides prévus à l'emplacement de réception du véhicule autonome de transfert. Le convoyeur embarqué peut, en outre, être équipé de guides latéraux pour les palettes, notamment sur son côté opposé à l'emplacement de réception du véhicule autonome de transfert.

Dans l'ensemble, le transstockeur avec nacelle à convoyeur embarqué conforme à la présente invention, offre les avantages suivants :
- Il permet des échanges simultanés et rapides avec l'entrée et la sortie du magasin de stockage.
- Il permet aussi un chargement et un déchargement en temps masqué du véhicule autonome de transfert, reçu et maintenu sur la nacelle.
- Il procure ainsi une réduction des temps de cycle totaux du magasin de stockage, donc une augmentation des flux de palettes par heure (ou autre unité de temps).
- Il reste une solution simple et économique, limitée à une adaptation du transstockeur et en particulier de la nacelle de ce dernier, sans modification de la conception du magasin de stockage lui-même, ni des véhicules autonomes de transfert.

L'invention sera mieux comprise à l'aide de la description qui suit, en référence au dessin schématique annexé représentant, à titre d'exemple, une forme d'exécution de ce transstockeur avec nacelle à convoyeur embarqué pour magasin de stockage automatisé :
Figure 1 est une vue en plan par-dessus, très schématique et partielle, d'un magasin de stockage automatisé de palettes dans lequel intervient un transstockeur conforme à la présente invention ;
Figure 2 est une vue d'ensemble en perspective du transstockeur avec nacelle à convoyeur embarqué selon l'invention ;
Figure 3 représente le convoyeur embarqué seul, vu en perspective ;

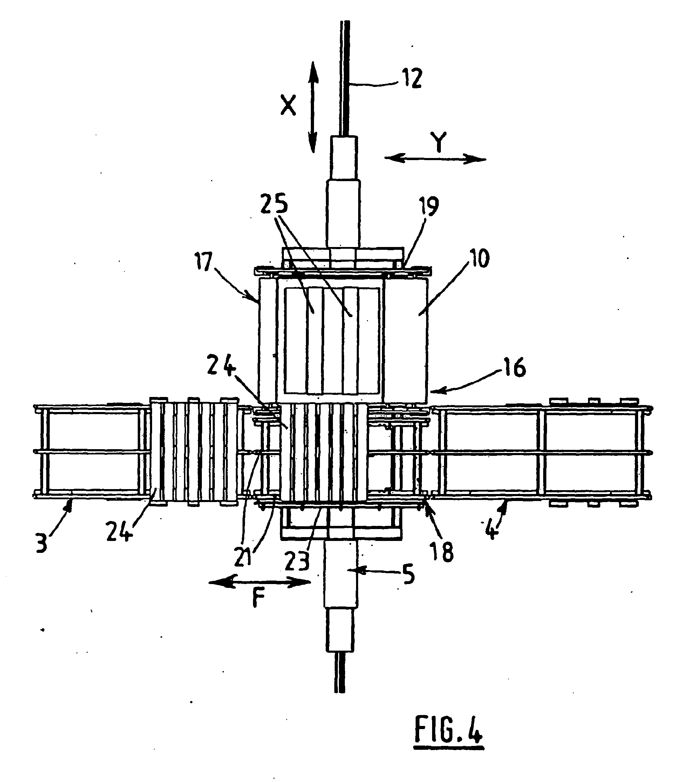

Figure 4 est une vue en plan par-dessus du transstockeur, avec son convoyeur embarqué amené dans l'alignement des convoyeurs d'entrée et de sortie.

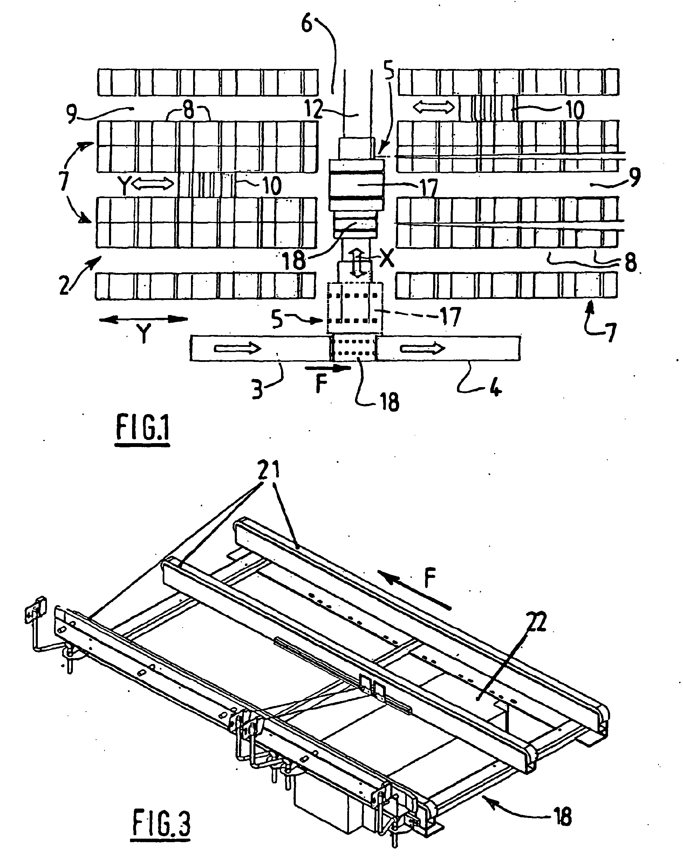

Pour situer le contexte de l'invention, la figure 1 montre très schématiquement une installation de stockage d'un type généralement connu, qui comprend un magasin de stockage automatisé 2 proprement dit, ainsi qu'un réseau de convoyage avec un convoyeur d'entrée 3 et un convoyeur de sortie 4, situés au niveau du sol, qui servent respectivement à alimenter le magasin 2 en palettes, et à évacuer les palettes depuis ce magasin 2.

Le magasin de stockage 2 proprement dit comporte plusieurs niveaux desservis par au moins un transstockeur 5 qui se déplace horizontalement dans une allée 6, perpendiculaire à la direction commune des convoyeurs d'entrée 3 et de sortie 4. Des rayonnages 7 sont prévus à chaque niveau du magasin 2, chaque rayonnage 7 recevant, en des emplacements 8 déterminés, des palettes sur lesquelles sont posés des produits à stocker. Chaque rayonnage 7 comporte deux lignes parallèles d'emplacements 8, séparés par un couloir 9 équipé de rails horizontaux formant une voie de roulement, tous les couloirs 9 étant perpendiculaires à l'allée de transstockeur 6 et débouchant dans cette allée 6.

Dans les couloirs 9 circulent horizontalement (axe Y) des véhicules autonomes de transfert 10, guidés le long des rails, chaque véhicule 10 étant prévu pour prendre en charge une palette avec son chargement, afin d'amener la palette dans un emplacement 8 d'un rayonnage 7, ou de retirer la palette de cet emplacement 8.

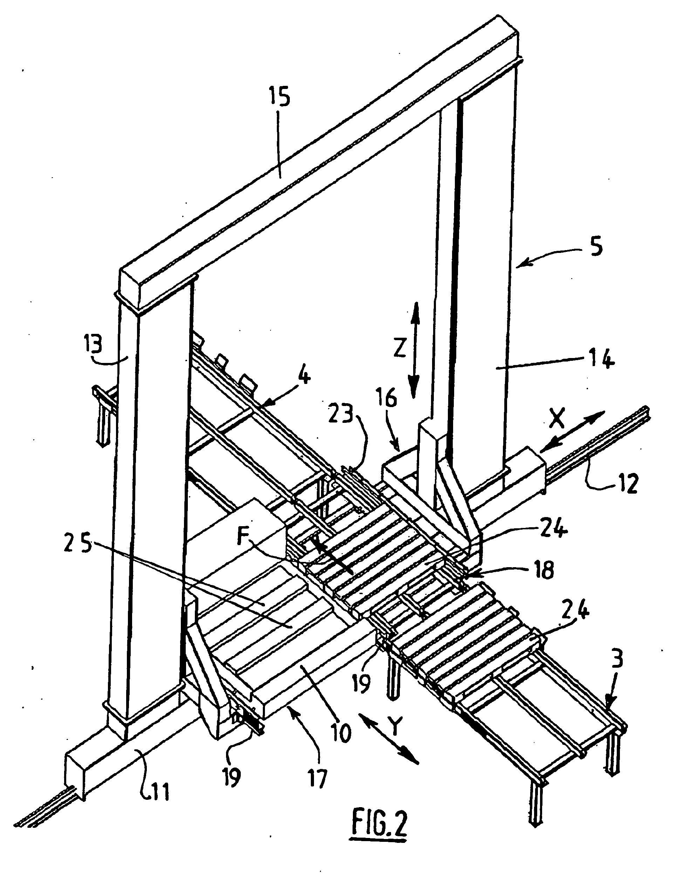

Le transstockeur 5, représenté notamment sur la figure 2, comporte dans l'exemple illustré une embase 11 mobile horizontalement le long d'un rail 12 (axe X) et deux mâts 13 et 14 reliés entre eux à leur sommet par une poutre horizontale 15. Entre les deux mâts 13 et 14 est montée mobile une nacelle 16, qui se déplace verticalement (axe Z). La nacelle 16 comporte, sensiblement sur un même niveau, d'une part un emplacement de réception 17 pour un véhicule autonome de transfert 10, et d'autre part un convoyeur embarqué 18.

L'emplacement de réception 17 comporte, sur sa longueur c'est-à-dire transversalement au transstockeur 5, deux guides horizontaux 19 qui sont parallèles à la direction de déplacement (axe Y) des véhicules autonomes de transfert 10.

Le convoyeur embarqué 18 se situe, sur la nacelle 16 du transstockeur 5, sur un côté de l'emplacement de réception 17. Ce convoyeur embarqué 18, représenté seul sur la figure 3, comporte des chaînes sans fin 21 dont la direction de défilement F est parallèle aux guides 19 de l'emplacement de réception 17, donc parallèle aussi à la direction de déplacement (axe Y) des véhicules autonomes de transfert 10. Les chaînes 21 du convoyeur embarqué 18 sont animées par un moteur 22, lui aussi embarqué sur la nacelle 16.

Sur le côté du convoyeur embarqué 18 opposé à l'emplacement 17 recevant le véhicule autonome 10, sont prévus des guides latéraux 23 pour des palettes posées sur ce convoyeur 18.

Par le déplacement horizontal l'ensemble du transstockeur 5 selon l'axe X, et le déplacement vertical de la nacelle 16 selon l'axe Z, cette nacelle 16 peut être amenée en face de chaque couloir 9 desservant un rayonnage 7. Plus particulièrement, comme l'indique la figure 1, l'emplacement de réception 17 est alors positionné en face du débouché du couloir 9, de telle sorte que les guides 19 prévus à cet emplacement 17 se situent dans le prolongement des rails du couloir 9. Une telle position du transstockeur 5 permet ainsi le passage d'un véhicule autonome 10 depuis le couloir 9 vers la nacelle 16, ou inversement. En particulier, le transstockeur 5 peut ainsi recevoir à l'emplacement 17 un véhicule autonome 10, porté par les guides 19.

Le transstockeur 5 peut aussi être amené à l'extrémité de l'allée 6, avec sa nacelle 16 descendue au niveau le plus bas, de telle sorte que cette nacelle 16 soit engagée entre le convoyeur d'entrée 3 et le convoyeur de sortie 4, ce qui permet le transfert des palettes 24 entre les différents convoyeurs.

En partant d'une telle position du transstockeur 5, et en présence d'un véhicule autonome 10 sur la nacelle 16 à l'emplacement 17, un cycle de chargement-évacuation d'une palette 24 se déroule comme suit :

Le convoyeur d'entrée 3 porte une palette 24 à stocker dans le magasin 2, et le convoyeur embarqué 18 porte une palette 24 à évacuer. Le convoyeur de sortie 4 est initialement libre de toute palette. Les trois convoyeurs 3, 4 et 18 sont mis en mouvement simultanément et dans le même sens (flèche F), et ainsi les palettes 24 considérées sont transférées d'un convoyeur à l'autre : la palette 24 située sur le convoyeur embarqué 18 passe sur le convoyeur de sortie 4, tandis que la palette 24 situé sur le convoyeur d'entrée 3 passe sur le convoyeur embarqué 18, en prenant la place de la palette évacuée. Ainsi, en une seule opération, la nacelle 16 du transstockeur 5 est déchargée et rechargée.

Durant le trajet du transstockeur 5 entre le point de chargement, c'est-à-dire l'extrémité de l'allée 6, et l'entrée du couloir 9 du rayonnage 7 à alimenter, le véhicule autonome 10 situé sur la nacelle 16 du transstockeur 5 prend en charge la palette 24 chargée initialement sur le convoyeur embarqué 18. Plus particulièrement, le véhicule autonome 10 étant équipé de fourches 25 déployables latéralement, ces fourches 25 sont actionnées selon un cycle qui effectue un soulèvement de la palette 24 par rapport au convoyeur embarqué 18, puis l'amenée de cette palette 24 jusqu'au centre du véhicule autonome 10 et finalement sa pose sur ce véhicule. Ainsi, le chargement du véhicule autonome 10 s'effectue en "temps masqué" pendant le mouvement du transstockeur 5.

Une fois parvenu en face du couloir 9 à atteindre, le véhicule autonome 10 peut directement s'engager dans ce couloir 9 et déposer la palette 24 à l'emplacement 8 voulu, dans le rayonnage 7 concerné.

Lors d'un retour du transstockeur 5 vers le point d'entrée du magasin de stockage 2, le cycle inverse est effectué, pour transférer une palette 24 depuis un rayonnage 7 jusque sur le convoyeur de sortie 4. En particulier, au cours du déplacement du transstockeur 5, la palette 24 sera transférée, sur la nacelle 16 de ce transstockeur, depuis le véhicule autonome 10 reçu à l'emplacement 17 vers le convoyeur embarqué 18, d'où elle sera directement évacuée sur le convoyeur de sortie 4.

L'on ne s'éloignerait pas du cadre de l'invention, telle que définie dans les revendications annexées :
- en modifiant les parties du transstockeur autres que la nacelle, par exemple en réalisant ce transstockeur indifféremment avec deux mâts ou avec un seul mât ;
- en modifiant le nombre de chaînes sans fin du convoyeur embarqué, ou en remplaçant ces chaînes par des courroies sans fin ou par un tapis sans fin ou encore par des rouleaux motorisés ;
- en utilisant ce transstockeur avec des véhicules autonomes de transfert pouvant posséder, au lieu des fourches, tous moyens de transfert latéral aptes à réaliser l'échange de palettes avec le convoyeur embarqué, sur la nacelle ;
- en incorporant un tel transstockeur dans un magasin de stockage automatisé de palettes pouvant posséder toutes dimensions et caractéristiques.

## Revendications

1. Transstockeur (5) pour magasin (2) de stockage automatisé de palettes (24) le transstockeur (5) étant déplaçable dans une allée (6) du magasin (2) et étant adapté pour un magasin de stockage (2) utilisant des véhicules autonomes de transfert (10) se déplaçant horizontalement dans une direction (Y) perpendiculaire à l'allée (6) de déplacement du transstockeur, le transstockeur (5) possédant une nacelle (16) mobile verticalement qui comporte un emplacement de réception (17) pour un véhicule autonome de transfert (10), **caractérisé en ce que** la nacelle (16) comporte un convoyeur embarqué (18) pour la réception et le transfert de palettes (24), le convoyeur embarqué (18) étant situé sensiblement au même niveau que l'emplacement de réception (17) pour le véhicule autonome de transfert (10) et sur un côté de l'emplacement de réception (17) pour le véhicule autonome de transfert (10), la direction horizontale (F) de déplacement du convoyeur embarqué (18) étant parallèle à la direction de déplacement (Y) du véhicule autonome de transfert (10).

2. Transstockeur selon la revendication 1, **caractérisé en ce que** l'emplacement (17) de la nacelle (16) recevant le véhicule autonome de transfert (10) comporte, sur sa longueur, des guides horizontaux (19) parallèles à la direction de déplacement (Y) du véhicule autonome de transfert (10), guides (19) sur lesquels est reçu ledit véhicule (10).

3. Transstockeur selon la revendication 1 ou 2, **caractérisé en ce que** le convoyeur embarqué (18) consiste en un convoyeur motorisé (22) à chaînes sans fin (21), la direction de défilement (F) des chaînes (21) étant parallèle à la direction de déplacement (Y) du véhicule autonome de transfert (10), donc en particulier à la direction des guides (19) prévus à l'emplacement de réception (17) du véhicule autonome de transfert (10).

4. Transstockeur selon l'une des revendications 1 à 3, **caractérisé en ce que** le convoyeur embarqué (18) est équipé de guides latéraux (23) pour les palettes (24), notamment sur son côté opposé à l'emplacement de réception (17) du véhicule autonome de transfert (10).

5. Transstockeur selon l'une des revendications 1 à 4, **caractérisé en ce qu'**il est utilisé avec un véhicule autonome de transfert (10) équipé de fourches latérales (25) de manipulation de palettes, utilisées sur la nacelle (16) du transstockeur (5) pour la prise en charge d'une palette (24) par le véhicule (10) reçu à l'emplacement (17), depuis le convoyeur embarqué (18), ou inversement pour le déchargement d'une palette (24) depuis le véhicule (10) vers le convoyeur embarqué (18).

## Claims

1. A storage and retrieval machine (5) for an automated warehouse (2) for pallets (24), the storage and retrieval machine (5) being displaceable in an alley of the warehouse (2) and being suitable for a storage warehouse (2) using autonomous transfer vehicles (10) moving horizontally in a direction (Y) perpendicular to the displacement alley (6) of the storage and retrieval machine, the storage and retrieval machine (5) having a vertically mobile cradle (16), which includes a location (17) for receiving an autonomous transfer vehicle (10), **characterized in that** the cradle (16) includes an on-board conveyor (18) for receiving and transferring pallets (24), the on-board conveyor (18) being substantially located at the same level as the location (17) for receiving the autonomous transfer vehicle (10) and on one side of the location (17) for receiving the autonomous transfer vehicle (10), the horizontal displacement direction (F) of the on-board conveyor (18) are being parallel to the displacement direction (Y) of the autonomous transfer vehicle (10).

2. The storage and retrieval machine according to claim 1, **characterized in that** the location (17) of the cradle (16) receiving the autonomous transfer vehicle (10) includes over its length, horizontal guides (19) parallel to the displacement direction (Y) of the autonomous transfer vehicle (10), guides (19) on which said vehicle (10) is received.

3. The storage and retrieval machine according to claim 1 or 2, **characterized in that** the on-board conveyor (18) consists in a motorized conveyor (22) with endless chains (21), the travel direction (F) of the chains (21) being parallel to the displacement direction (Y) of the autonomous transfer vehicle (10), therefore, in particular to the direction of the guides (19) provided at the location (17) for receiving the autonomous transfer vehicle (10).

4. The storage and retrieval machine according to any of claims 1 to 3, **characterized in that** the on-board conveyor (18) is equipped with side guides (23) for the pallets (24), notably on its side opposite to the location (17) for receiving the autonomous transfer vehicle (10).

5. The storage and retrieval machine according to any of claims 1 to 4, **characterized in that** it is used with an autonomous transfer vehicle (10) equipped with the side forks (25) for handling pallets, used on the cradle (16) of the storage and retrieval machine (5) are for the handling of a pallet (24) are by the vehicle (10) received at the location (17), from the on-board conveyor (18) or conversely for unloading a pallet (24) from the vehicle (10) to the on-board conveyor (18).

## Patentansprüche

1. Regalförderzeug (5) für Lager (2) mit automatisierter Paletten-Lagerhaltung (24), wobei das Regalförderzeug (5) in einem Gang (6) des Lagers (2) verschiebbar ist und für ein Lagerhaltungs-Lager (2) geeignet ist, das autonome Transferfahrzeuge (10) verwendet, die sich horizontal in eine Richtung (Y) senkrecht zum Gang (6) der Verschiebung des Regalförderzeugs verschieben, wobei das Regalförderzeug (5) eine vertikal bewegbare Gondel (16) besitzt, die eine Aufnahmefläche (17) für ein autonomes Transferfahrzeug (10) umfasst, **dadurch gekennzeichnet, dass** die Gondel (16) ein fahrzeugseitiges Förderband (18) zur Aufnahme und zum Transfer von Paletten (24) aufweist, wobei sich das fahrzeugseitige Förderband (18) etwa auf derselben Ebene wie die Aufnahmefläche (17) für das autonome Transferfahrzeug (10) und auf einer Seite der Aufnahmefläche (17) für das autonome Transferfahrzeug (10) befindet, wobei die horizontale Verschieberichtung (F) des fahrzeugseitigen Förderband (18) parallel zur Verschieberichtung (Y) des autonomen Transferfahrzeugs (10) ist.

2. Regalförderzeug nach Anspruch 1, **dadurch gekennzeichnet, dass** die Fläche (17) der Gondel (16), die das autonome Transferfahrzeug (10) aufnimmt, über ihre Länge horizontale Führungen (19) parallel zur Verschieberichtung (Y) des autonomen Transferfahrzeugs (10) aufweist, wobei das Fahrzeug (10) auf diesen Führungen (19) aufgenommen ist.

3. Regalförderzeug nach Anspruch 1 oder 2, **dadurch gekennzeichnet, dass** das fahrzeugseitige Förderband (18) aus einem motorisierten Förderband (22) mit Endlosketten (21) besteht, wobei die Laufrichtung (F) der Ketten (21) parallel zur Verschieberichtung (Y) des autonomen Transferfahrzeugs (10) ist, also insbesondere zur Richtung der an der Aufnahmefläche (17) des autonomen Transferfahrzeugs (10) vorgesehenen Führungen (19).

4. Regalförderzeug nach einem der Ansprüche 1 bis 3, **dadurch gekennzeichnet, dass** das fahrzeugseitige Förderband (18) mit seitlichen Führungen (23) für die Paletten (24) ausgestattet ist, vor allem auf seiner der Aufnahmefläche (17) des autonomen Transferfahrzeugs (10) gegenüberliegenden Seite.

5. Regalförderzeug nach einem der Ansprüche 1 bis 4, **dadurch gekennzeichnet, dass** es mit einem autonomen Transferfahrzeug (10) verwendet wird, das mit seitlichen Gabeln (25) zur Palettenhandhabung ausgestattet ist, die auf der Gondel (16) des Regalförderzeugs (5) zur Übernahme einer Palette (24) vom fahrzeugseitigen Förderband (18) durch das auf der Fläche (17) aufgenommene Fahrzeug (10) oder umgekehrt für die Entladung einer Palette (24) vom Fahrzeug (10) auf das fahrzeugseitige Förderband (18) verwendet werden.
